# EUROPEAN PATENT SPECIFICATION

(11) **EP 2 289 721 B1**
(45) Date of publication and mention of the grant of the patent: **06.11.2013**
(21) Application number: 09425307.7
(22) Date of filing: 30.08.2009
(51) Int. Cl.: B60J 5/04

(54) **Door for a cabin of an industrial vehicle and cabin comprising such door**
Tür für ein Führerhaus eines Industriefahrzeugs und Führerhaus, das eine solche Tür umfasst
Porte pour la cabine d'un véhicule industriel et cabine dotée de ladite porte

(43) Date of publication of application: 02.03.2011
(73) Proprietor: IVECO S.p.A., 10156 Torino (IT)
(72) Inventor: Zogno Stefano, 10015 IVREA (IT)
(74) Representative: Cinquantini, Bruno

(56) References cited:
- EP-A- 1 405 746
- EP-B- 1 465 787
- GB-A- 2 101 535
- US-A- 4 434 580

## Description

### FIELD OF THE INVENTION

The present invention belongs to the manufacturing field of industrial vehicles, such as for example commercial vehicles and/or trucks. More in particular, the invention relates to a door for a cabin of an industrial vehicle and a cabin comprising such door.

### DESCRIPTION OF THE PRIOR ART

As known in the art, the cabins of the industrial vehicles (such as for example commercial vehicles and/or trucks with medium or high carrying capacity) are equipped with two side doors which allow the driver and possible passenger to get on board. In most of the cases, each door is hinged to the support structure of the cabin by means of a pair of hinges. Moreover, each door is equipped with a lock, in order to keep the door itself in closed configuration.

In some countries, such as Sweden, severe regulations have been in force for many years regarding the structural resistance of the cabins. Some of these regulations relate to the required resistance to the cabin doors. In particular, such regulations decree that in case of head-on or compound crashes (namely crashes affecting the front part or the side part), doors must stay closed, namely they must not open toward the outside. These regulations further decree that doors must be able to open after the crash.

With the aim to respect these regulations, car manufacturers, traditionally arrange a central reinforcement (also called waist reinforcement), which develops between the two side pillars in order to locally stiffen the door. In some solutions, reinforcement pivots are welded to the perimetral parts of the door. When the door takes a closed configuration, such pivots are placed in appropriate predefined openings on the support structure of the cabin. Practically, these pivots allow the door to rotate, but prevent, in case of crashes, possible translations with respect to the support structure of the cabin.

In order to allow the door opening after the crash, in many known solution particular locks are used, substantially custom-made. Practically, such locks present a reinforcement structure having higher dimensions and performance than those produced "in series", namely available on the market.

These solutions, even though they are relatively effective, disadvantageously imply high realization costs. The use of special locks on the one hand and the welding of the reinforcement pivot on the other hand considerably increase the production and the assembling costs of the cabins. So far, however, these solution have been accepted because of the limited demand of vehicles intended to be used in the Countries where these regulations are in force. In other words, so far these technical solution have been accepted just because the limited production of industrial vehicles type-approved for these regulations, since these solutions would not be affordable for a production in series.

For this reason, these solution will no longer be accepted, since the OICA regulations will soon become in force. These regulations will extend to the whole European Union the requirements of structural resistance of the cabins and of the doors described above, which are now in force just in a few Countries. Actually, regulations similar to the OICA regulations are going to be adopted in the near future also by extra-European Countries.

Examples of known door structures of vehicles are disclosed in GB 2101535, US 4434580, EP 1405756 and EP 1465787. Any of the above mentioned documents can be taken as basis for the preamble features of claim 1. More in detail GB 2101535, US 4434580 and EP 1465787 disclose a door comprising main structure having a first pillar, on which a lock reinforcement portion is mounted, and a second pillar along which a first hinge and a second hinge are arranged. The door comprises two reinforcement elements which connect thesecond pillar to the lock reinforcement portion of the first pillar. In particular the reinforcement elements are converging on the lock reinforcement element. EP 1405756 discloses a door structure of a vehicle wherein two impacts bars are arranged between the two pillars of the door. Another reinforcement element is arranged at one of the pillars in order to make the door more rigid.

In all the cases, the door structures shown in the documents above cited can not be satisfactorily used for a cabin of an industrial vehicle. In particular such known solutions can not effectively resist to crashes. Moreover after the crashes these known vehicle doors can not be actually opened contrarily to what provided by international regulations.

From these considerations, the need for new technical solutions, allowing to overcome the limits and the disadvantages mentioned above, emerges. In particular, the need for new doors which respect the international regulations relating to the safety and to the resistance, but which also justify a production in series having limited production time and costs.

### SUMMARY OF THE INVENTION

The main purpose of the present invention is to provide a door for a cabin of an industrial vehicle. In the scope of this task, the purpose of the present invention is to provide a door which keeps the closed position in case of crashes. Another purpose is to provide a door for an industrial vehicle whose structure allows to keep the functionality of the lock intact, also in case of crashes. Not least the purpose of the present invention is to provide a door for an industrial vehicle which is reliable and easy to be produced with competitive costs.

The present invention is therefore relating to a door for industrial vehicle, which comprises a main structure equipped with a first and a second pillar, transversally connected by at least a first and a second transversal connection portion. The door further comprises a lock and a reinforcement portion of the lock in order to leave the functional characteristics intact. The door comprises at least a first hinge, equipped of a first connection portion which allows the connection to the main structure of the door. The door according to the invention comprises a first reinforcement element which connects the reinforcement portion of the lock to the first connection portion of the first hinge.

The door is characterized in that said second transversal connection part comprises a wheelhouse portion which develops towards said first pillar and which lays on an arc-shaped portion of said vehicle, when said door is closed configuration. A second reinforcement element which connects a portion of the second pillar, placed under the first hinge, to the wheelhouse portion of the second transversal connection portion.

The two reinforcement elements that are present for each door according to the invention advantageously allow to discharge the energy of the crash on the bodywork and on the perimetral support structure of the cabin, substantially allowing the door to stay closed during the collision. At the same time, the two reinforcement elements provide the necessary stiffness to the door without affecting the overall weight of the door itself. The two reinforcement elements and the two pillars define a structure which absorbs the collision of the vehicle by discharging it on the pillars and on the wheelhouse portion. This solution advantageously solves the problem of providing a more resistant safe door, which can resist to crashes on a more effective way and which can be opened after crashes, in accordance with the international regulations. The technical effect reachable by the present invention can not be obtained by the known solutions disclosed in the above cited documents (GB 2101535, US 4434580, EP 1405756 and EP 1465787) wherein the doors are "front car doors" which typically do not have wheelhouse portions because the front doors are arranged in a back position with respect to the wheels.

According to a first aspect of the present invention, the door also comprises a second hinge connected to the door by means of a second connection portion. The second hinge is functionally placed on the second pillar of the door, under the first hinge. The second connection element connects a portion of the second pillar between the two hinges to the wheelhouse portion of the second transversal connection portion.

The first reinforcement element preferably comprises a first end part connected to the first connection portion of the first hinge by means of first mechanical connection means comprising, for example, connection bolts. A second end part of the first reinforcement element is instead connected to the reinforcement element of the lock, by means of second mechanical connection means, for example spot welding.

The first reinforcement element comprises an intermediate part between the two end parts, which is defined by a front portion and by a rear portion. The front portion and the first connection end part are preferably thicker than the rear portion and the second end part. In order to obtain this condition, the first reinforcement element may advantageously be realized by means of the technique called "tailored blank".

### LIST OF THE FIGURES

Further characteristics and advantages will become more evident from the following detailed description of embodiments of a door for industrial vehicle according to the present invention, that is shown in a merely illustrative and not limitative form in the attached drawings wherein:
- figure 1 is a prospective view of a cabin of an industrial vehicle comprising a door according to the present invention;
- figure 2 is a first prospective view of a door for industrial vehicle according to the present invention;
- figure 3 is a second prospective view of the door of figure 2;
- figure 4 is a magnification of the detail A shown in figure 3;
- figure 5 is a magnification of the detail B shown in figure 3;
- figure 6 is a magnification of the detail C shown in figure 3;
- figure 7 is a prospective view of the door of figure 2 from a different point of view;
- figure 8 is a magnification of the detail D shown in figure 7;
- figures 9 and 10 respectively show the effects of a crash-test on a traditional door and on a door according to the present invention.

### DETAILED DESCRIPTION OF THE INVENTION

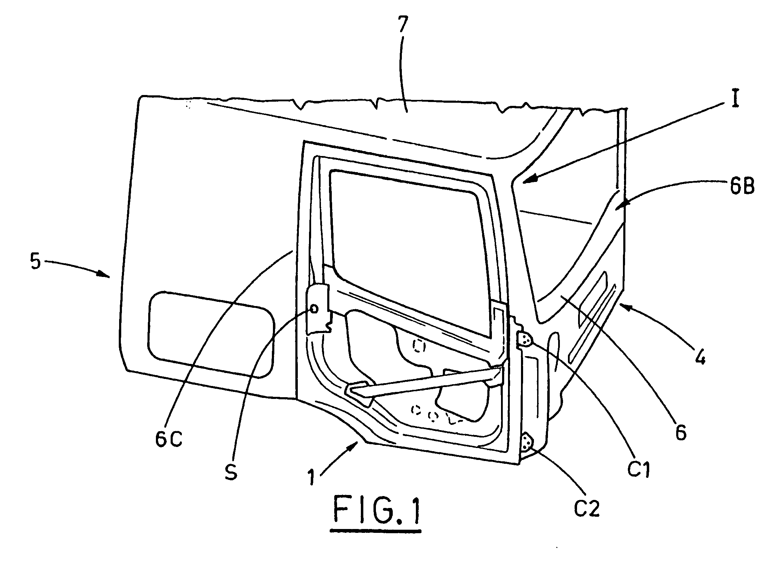

Figure 1 shows a cabin 5 for an industrial vehicle comprising a door 1 according to the present invention; The cabin 5 comprises a main body 4 equipped with a base 6, in the following indicated also with the expression bodywork 6, from which a perimetral support structure 6B develops. Cabin 5 is delimited in its upper part by a roof 7 which may be flat, as in the illustrated solution or, as an alternative, shaped. The door 1 is hinged to the perimetral structure of the cabin by means of a first C1 and a second hinge C2 in order to take a open or a closed configuration. The door 1 is equipped with a lock S which allows/prevents its opening.

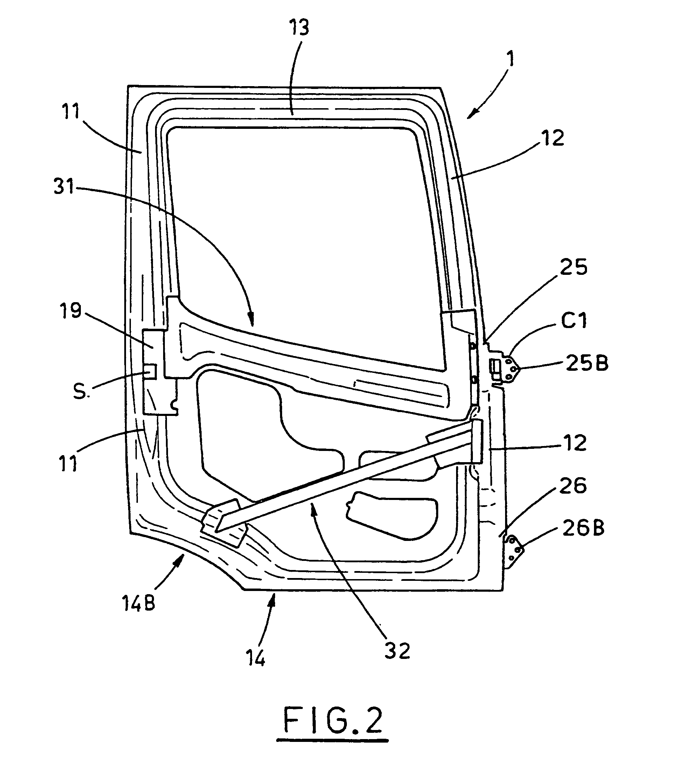

Figure 2 shows a prospective view of a door 1 according to the present invention. The door 1 comprises a main structure which includes a first pillar 11 (henceforth indicated also as rear pillar 11) near which the lock S is placed and a second reinforcement pillar 12 opposite to the first 11. The door 1 comprises a reinforcement portion 19 of the lock S which is connected to the first pillar 11, e.g. by welding, near the lock S. The reinforcement portion 19 has the function to preserve the functionality of the lock S in case of a crash, so that the door can open anyway.
The door 1 comprises a first hinge C1 (henceforth indicated also as upper hinge C1) provided with a first connection portion 25. The door 1 preferably comprises also a second hinge C2 (henceforth indicated also as lower hinge C2) placed under the first hinge C1 and equipped with a first connection portion 26. The first connection portion 25 practically has the function to connect the first hinge C1 to the structure of the door 1. The hinge C1 comprises also another connection portion 25B which allows the connection to the perimetral support structure 6B of the cabin 5. Similarly the second connection portion 26 to the door 1 connects the second hinge C2 to the structure of the door 1, while a further connection portion 26B allows its connection to the structure 6B of the cabin 5.
Also with reference to figure 2, the door 1 comprises a first transversal part 13 and a second transversal part 14 which connect the two pillars 11 and 12 respectively in upper and lower position. In particular, the position of the two transversal parts 13 and 14 is determined with respect to the door 1 configuration of use shown in figure 1 according to which the first transversal part 13 is placed in an upper position than the second transversal part 14.
The latter comprises an arc-shaped portion, henceforth indicated as wheelhouse portion 14B, which develops toward the first pillar 11. As shown in the prospective view of figure 1, when the door 1 is in closed configuration, the wheelhouse portion 14B lays on a portion of a bodywork 6 that is arc-shaped as well. Such portion, also called sill, is intended to be functionally placed over the wheels (not shown) of the industrial vehicle.

Also with reference to figure 2, the door 1 according to the invention comprises a first reinforcement element 31 which directly connects the reinforcement portion 19 of the lock S to the first door connection portion 25 of the upper hinge C1. The door 1 also comprises a second reinforcement element 32 which directly connects a portion of the second pillar 12 under the first connection portion 25 of the hinge C1 to the wheelhouse portion 14B of the second transversal part 14.

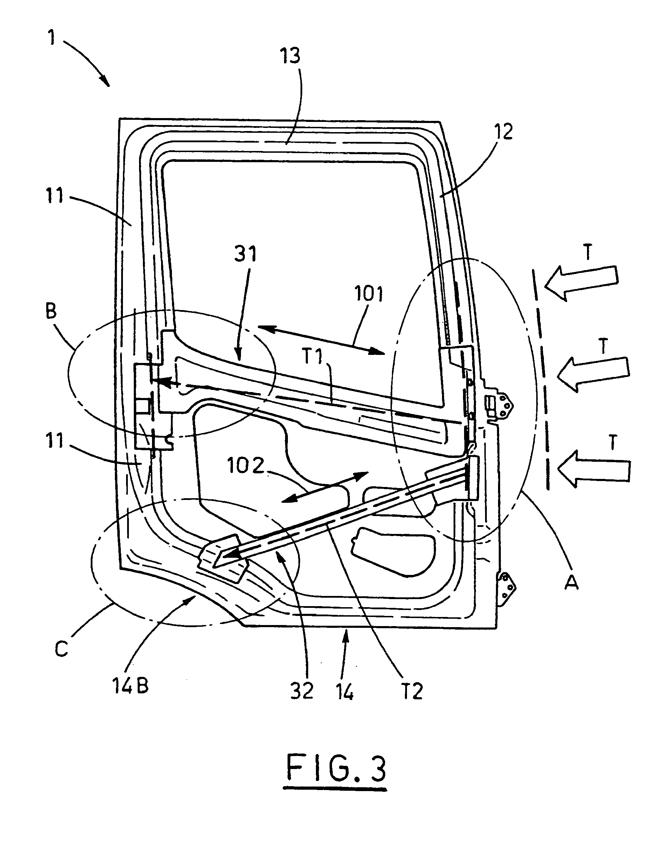

With reference to figure 3, it has been shown that the two reinforcement elements 31,32 allow the door 1 according to the invention to respect the requirements decree in the international regulations OICA, allowing, at the same time, a reduction of the overall weight of the door itself. In particular, after a collision against the front corner of the cabin 5 (following, for example, the arrow I indicated in figure 1), the impulsive load (schematized with the reference arrows T) is transferred from the front support structure 6B of the cabin 5 to the front pillar 12 of the door 1 by means of the two hinges C1 and C2. By means of the first reinforcement element 31 a first part of the load (reference T1) is transferred from the front pillar 12 to the reinforcement portion 19 of the lock S. The reinforcement portion 19 discharge, on its turn, such first load portion T1 on the side 6C support structure 5B of the cabin 5. By means of the second reinforcement element 32 a second part of the load (reference T2) is discharged on the portion (sill) of the bodywork 5B on which the wheelhouse portion 14B of the door 1 lays. In other words, the two reinforcement elements 31, 32 together with the two pillars 11, 12 define an articulated quadrilateral which absorbs the impulsive load T deriving from the collision, by discharging it on the portions of the cabin 5 on which both the rear pillar 11 and wheelhouse portion 14B of the door 1 lay.
As clearly shown in figure 3, the two reinforcement elements 31, 32 prevent the impulsive load to be distributed on the upper 13 and on the lower 14 part of the door, hence preventing the opening, namely a translation towards the outside with respect to the support structure 6B of the cabin.

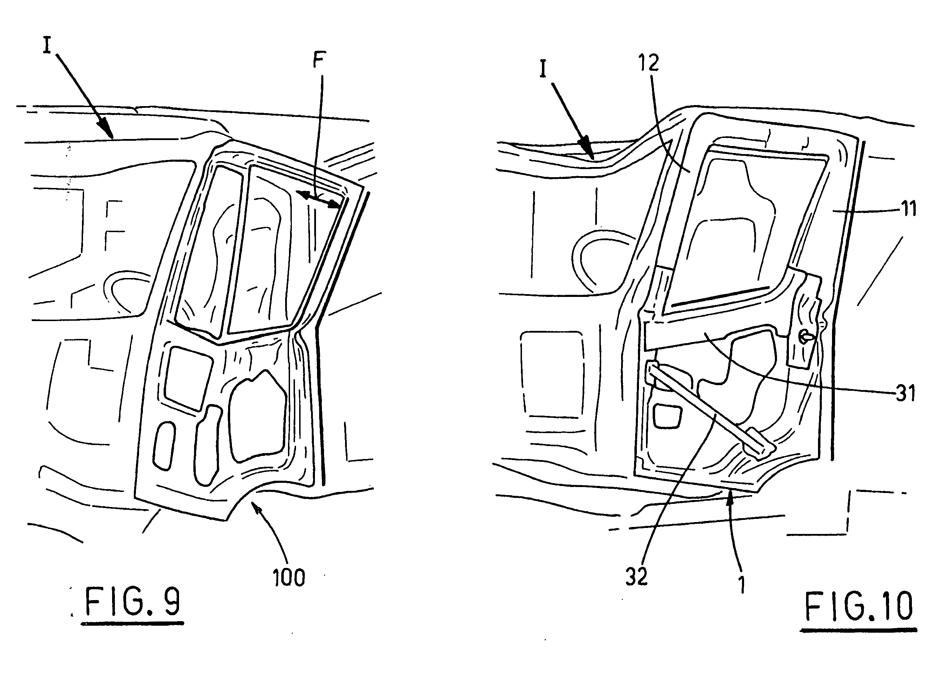

Figures 9 and 10 respectively show the behaviour of a traditional door 100 and of a door 1 according to the present invention, in the hypothesis of a collision near the right upper corner of the cabin 5 (line of the impact indicated with the reference I). More precisely, such figures show the behaviour of the two doors (traditional 100 and according to the invention 1), mounted on the same cabin 5 and being subjected to the same impulsive load, applied in the same way.
It is possible to observe that, in such conditions, the traditional door 100 tends to open toward the outside, according to the direction indicated by the arrow F. On the contrary, the door 1 according to the invention (figure 10) substantially keeps a position adjacent to the support structure of the cabin 5, being subjected to a lower deformation with respect to the traditional door.

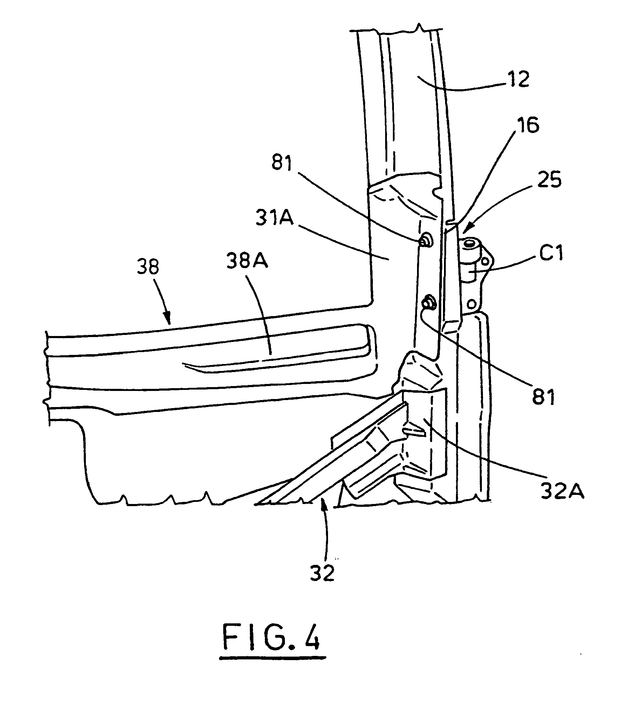

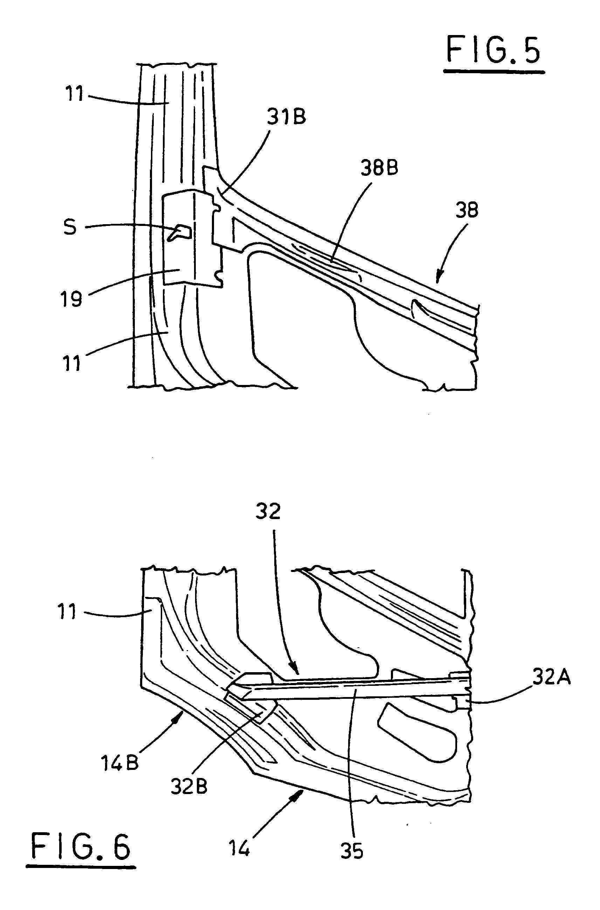

Figures 4 and 5 show in detail a possible embodiment of the first reinforcement element 31 which comprises a first end part 31A connected to the first connection portion 25 by means of first mechanical connection means 81. The first reinforcement element 31 also comprises a second end part 31B (substantially opposite to the first 31A) which is connected to the reinforcement element 19 of the lock S by means of second mechanical connection means. According to a preferred embodiment of the invention, the first mechanical connection means consists of connection bolts while the second mechanical connection means consists in a spot welding or, as an alternative, continuous welding.
With particular reference to figure 4, it is possible to observe that the first end part 31A of the first reinforcement element 31 is connected also to the front pillar 12, for example by means of a spot welding. As it is possible to see, a portion 16 of the front pillar is closed between the first end part 31A of the first reinforcement element 31 and the first connection portion 25 of the first hinge C1. In other words, the front pillar 12 is used also as connection interface between the first connection portion 25 and the first reinforcement element 31.
Also with reference to figures 4 and 5, the first reinforcement element 31 also comprises a first intermediate part 38 which connects the two end parts 31A, 31B of the element itself. The intermediate part 38 comprises a front portion 38A (see figure 4) connected to the first end part 31A and a rear portion 38B connected to the second end part 31B (see figure 5). Preferably, the front portion 38A and the first end part 31A are thicker than the rear portion 38B and the second end 31B. This condition allows to limit the overall weight of the door with obvious advantages in terms of easiness of use.
In order to provide this particular configuration to the first element 31, it is possible to advantageously use the production technique called "tailored blank", according to which two profiles with different thickness are first welded, then these two welded elements are pressed. In this specific situation, a first thicker profile, intended to define the first end 31A and the front intermediate portion 38A, is welded to a less thick profile intended to define the second end part 31B and the rear intermediate portion 38B. Then the two welded profiles are pressed, in order to give to the reinforcement element the configuration of the different parts 31, 32, 38A, 38B of which it consists.

Figure 4 shows in detail also a first connection flange 32A of the second reinforcement element 32 connected, e.g. by welding, to the front pillar 12 in a position under the first hinge C1. More precisely, the first connection flange 32A is connected, e.g. by welding, to a portion of the second pillar 12 comprised between the two connection portions 25, 26 of the two hinges C1, C2.
With reference to figure 6, the second reinforcement element 32 also comprises a second connection flange 32B which is connected, for example by spot welding, to the wheelhouse portion 14B of the door 1. The second element 32 further comprises an intermediate portion 35 placed between the two connection flanges 32A, 32B. The intermediate portion 35 preferably consists of a tubular element made of, for example, high tensile steel. According to an alternative embodiment, also the second reinforcement element may be advantageously made by means of the "tailored blank" technique described above for the first reinforcement element 31.
With reference to figure 3 again, it is possible to observe that the intermediate part of the first reinforcement element 31 develops according to a first direction 101 which is incident to a second direction 102 along which the intermediate portion 35 of the second reinforcement element develops. It has been shown that this particular disposition allows a better distribution of the collision energy on the cabin bodywork, with obvious advantages for the integrity of the door 1.

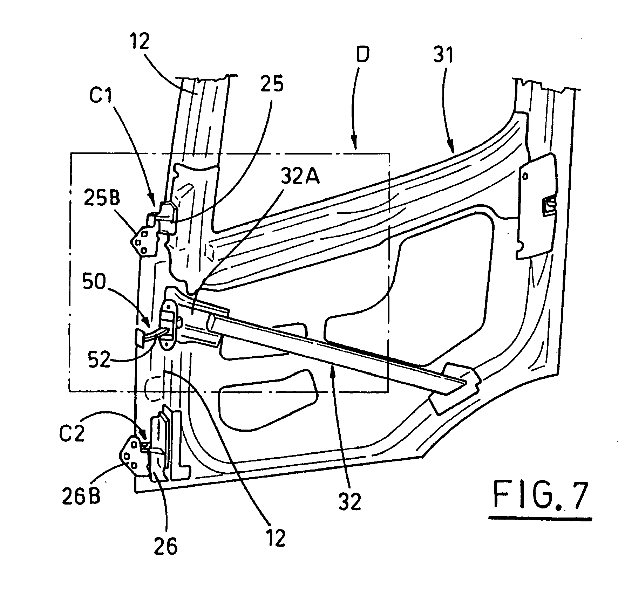

Figure 7 shows the door of figure 2 from an opposite point of view, which shows a preferred embodiment of the door 1, according to which the door comprises a stop tension rod 50 of the door. Such tension rod 50 has the function to limit the rotational stroke of the door 1 around the relative axis defined by the two hinges, in order to protect its integrity. According to this embodiment, the second reinforcement element 32 is connected to a first portion of the second pillar 12, under the first hinge C1, in the position where said stop tension rod is connected to the door 1.

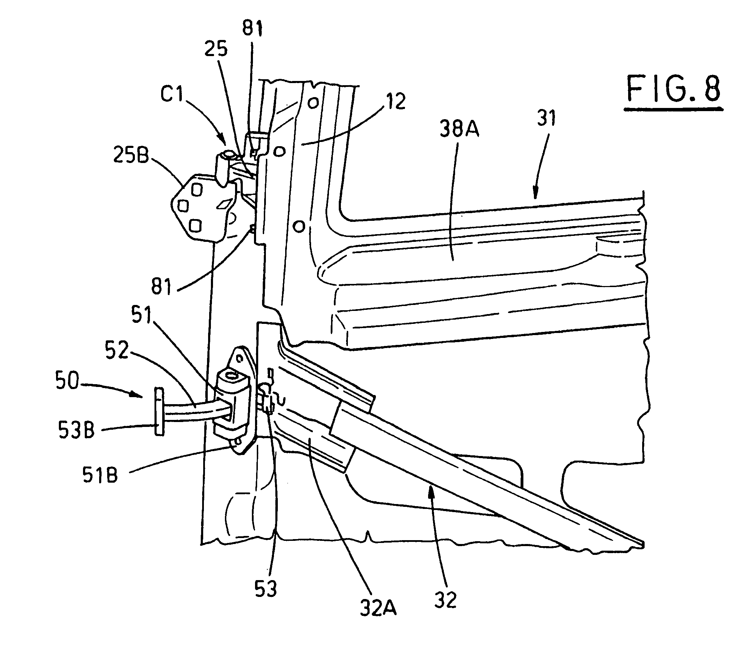

Figure 8 shows in detail the structure of the stop tension rod 50 which consists of a first body 51 intended to be firmly connected, for example by means of a bracket 51B, in a position fixed to the side portion 5B of the cabin 5. The tension rod 50 also comprises a second body 52 that slides with respect to the first 51 and whose first end 53 is hinged to the first connection flange 32A of the second reinforcement element 32. Said second body 52 has an arc configuration in order to help the rotation of the door 1 during its normal opening. In particular, when such rotation reaches a predetermined limit, a second end 53B of the second body 52, opposite to the first end 53, is blocked by the first body. This results in a stop of the sliding of the second body 51 with respect to the first, namely a stop of the rotation of the door 1.
The technical solutions adopted for the door allow to completely fulfil the task and the aim set. In particular the presence of the two reinforcement elements allow the door to remain closed during the collision, guaranteeing at the same time the integrity of the lock. This results in the possibility to use cheaper locks easily available on the market. Moreover, the use of the two reinforcement elements guarantees the necessary stiffness of the door, allowing at the same time to limit the weight of the door itself.

Practically, the material used and also the dimensions and the shapes may be any, according to the needs and the state of the art.

## Claims

1. Door (1) for an industrial vehicle, said door comprising:
- a main structure comprising a first (11) and a second pillar (12) transversally connected by a first transversal connection part (13) and by a second transversal connection part (14);
- a lock (S) placed near said first pillar (11) and a reinforcement portion of said lock (S);
- at least a first hinge (C1) comprising a first connection portion (25) to said main structure;
- a first reinforcement element (31) which connects said reinforcement portion (19) of said lock to said first connection portion (25) of said first hinge (C1), **characterized in that** said second transversal connection part (14) comprises a wheelhouse portion (14B) which develops towards said first pillar (11) and which lays on an arc-shaped portion of said vehicle, when said door is in a closed configuration;
- a second reinforcement element (32) which connects a portion of said second pillar (12) under said first connection portion (25) to said wheelhouse portion (14B) of said second transversal connection part (14).

2. Door (1) according to the claim 1, wherein said door (1) comprises a second hinge (C2) under said first hinge (C1), said second hinge (C2) comprising a second connection portion (26) to said door (1), said second reinforcement element (32) connecting a portion of said second pillar (12) comprised between said connection portions (25, 26) to said wheelhouse portion (14B) of said second transversal connection part (14).

3. Door (1) according to the claim 1 or 2, wherein said door comprises a stop tension rod (51) connected to said door (1) near said portion of said second pillar (12) comprised between said connection portions (25, 26) to which said second reinforcement element is connected (32).

4. Door (1) according to any of the previous claims from 1 to 3, wherein said first reinforcement element (31) comprises a first end part (31A) connected to said first connection portion (25) of the first hinge (C1) by means of first mechanical connection means (81), said first reinforcement element (31) comprising a second end part (31B) connected to the reinforcement portion (19) of the lock (S) by means of said second mechanical connection means.

5. Door (1) according to the claim 4, wherein said first mechanical connection means (81) comprise connection bolts and wherein said second mechanical connection means comprise a spot welding.

6. Door (1) according to claim 4 or 5, wherein said first reinforcement element (31) comprises an intermediate part (38) defined by a front portion (38A) connected to said first end part (31A) and by a rear portion (38B) connected to said second end part (31B), said front portion (38A) and said first end part(31A) are thicker than said rear portion (38B) and said second end part (31B).

7. Door (1) according to claim 6, wherein said first reinforcement element (31) is realized by means of the technique called "tailored blank".

8. Door (1) according to any of the previous claims from 1 to 7, wherein said second reinforcement element comprises a first connection flange (32A) connected to the second pillar (12) under said first connection part (25) of said first hinge, a second connection flange (32B) connected to said wheelhouse portion (14B) of said second transversal connection part and an intermediate portion (35) connected to said flanges (32A, 32B).

9. Door (1) according to claim 8, wherein said intermediate portion (35) of said second reinforcement element (32) consists of a tubular element, each one of its ends are welded to one connection flange (32A, 32B).

10. Door (1) according to claim 8, wherein said second reinforcement element (32) is realized by means of the technique called "tailored blank".

11. Cabin (5) for industrial vehicle **characterized in that** it comprises a door according to any of the previous claims from 1 to 10.

12. Industrial vehicle **characterized in that** it comprises a cabin (5) according to claim 11.

## Patentansprüche

1. Tür (1) für ein Industriefahrzeug, wobei die Tür aufweist:
- eine Hauptstruktur mit einer ersten (11) und einer zweiten Säule (12), die transversal durch ein erstes Querverbindungsteil (13) und durch ein zweites Querverbindungsteil (14) verbunden sind;
- ein Schloss (S), das nahe der ersten Säule (11) angeordnet ist, und einen Verstärkungsabschnitt des Schlosses (S);
- mindestens ein erstes Gelenk (C1), das einen ersten Verbindungsabschnitt (25) zu der Hauptstruktur aufweist;
- ein erstes Verstärkungselement (31), das den Verstärkungsabschnitt (19) des Schlosses mit dem ersten Verbindungsabschnitt (25) des ersten Gelenks (C1) verbindet,
**dadurch gekennzeichnet, dass** das zweite Querverbindungsteil (14) einen Radhausabschnitt (14B) aufweist, der sich in Richtung der ersten Säule (11) ausbildet, und der auf einem bogenförmigen Abschnitt des Fahrzeugs liegt, wenn die Tür in einer geschlossenen Konfiguration ist;
- ein zweites Verstärkungselement (32), das einen Abschnitt der zweiten Säule (12) unter dem ersten Verbindungsabschnitt (25) mit dem Radhausabschnitt (14B) des zweiten Querverbindungsteils (14) verbindet.

2. Tür (1) nach Anspruch 1, wobei die Tür (1) ein zweites Gelenk (C2) unter dem ersten Gelenk (C1) aufweist, wobei das zweite Gelenk (C2) einen zweiten Verbindungsabschnitt (26) zu der Tür (1) aufweist, wobei das zweite Verstärkungselement (32) einen Abschnitt der zweiten Säule (12), der zwischen den Verbindungsabschnitten (25, 26) enthalten ist, mit dem Radhausabschnitt (14B) des zweiten Querverbindungsteils (14) verbindet.

3. Tür (1) nach Anspruch 1 oder 2, wobei die Tür einen Haltezugstab (51) aufweist, der mit der Tür (1) verbunden ist, nahe dem Abschnitt der zweiten Säule (12), der zwischen den Verbindungsabschnitten (25, 26) enthalten ist, mit welchem das zweite Verstärkungselement (32) verbunden ist.

4. Tür (1) nach einem der vorhergehenden Ansprüche 1 bis 3, wobei das erste Verstärkungselement (31) ein erstes Endstück (31 A) aufweist, das mit dem ersten Verbindungsabschnitt (25) des ersten Gelenks (C1) durch erste mechanische Verbindungsmittel (81) verbunden ist, wobei das erste Verstärkungselement (31) ein zweites Endstück (31 B) aufweist, das mit dem Verstärkungsabschnitt (19) des Schlosses (S) durch die zweiten mechanischen Verbindungsmittel verbunden ist.

5. Tür (1) nach Anspruch 4, wobei die ersten mechanischen Verbindungsmittel (81) Verbindungsbolzen aufweisen und wobei die zweiten mechanischen Verbindungsmittel eine Punktschweißung aufweisen.

6. Tür (1) nach Anspruch 4 oder 5, wobei das erste Verstärkungselement (31) einen Zwischenteil (38) aufweist, definiert durch einen vorderen Abschnitt (38A), der mit dem ersten Endstück (31 A) verbunden ist, und durch einen hinteren Abschnitt (38B), der mit dem zweiten Endstück (31 B) verbunden ist, wobei der vordere Abschnitt (38A) und das erste Endstück (31 A) dicker sind als der hintere Abschnitt (38B) und das zweite Endstück (31 B).

7. Tür (1) nach Anspruch 6, wobei das erste Verstärkungselement (31) durch die Technik realisiert wird, die "maßgeschneiderte Platine" genannt wird.

8. Tür (1) nach einem der vorhergehenden Ansprüche 1 bis 7, wobei das zweite Verstärkungselement aufweist, einen ersten Verbindungsflansch (32A), der mit der zweiten Säule (12) unter dem ersten Verbindungsteil (25) des ersten Gelenks verbunden ist, einen zweiten Verbindungsflansch (32B), der mit dem Radhausabschnitt (14B) des zweiten Querverbindungsteils verbunden ist, und einen Zwischenabschnitt (35), der mit den Flanschen (32A, 32B) verbunden ist.

9. Tür (1) nach Anspruch 8, wobei der Zwischenabschnitt (35) des zweiten Verstärkungselements (32) aus einem röhrenförmigen Element besteht, wobei jedes von seinen Enden an einem Verbindungsflansch (32A, 32B) angeschweißt ist.

10. Tür (1) nach Anspruch 8, wobei das zweite Verstärkungselement (32) durch die Technik realisiert wird, die "maßgeschneiderte Platine" genannt wird.

11. Fahrgastraum (5) für ein Industriefahrzeug, **dadurch gekennzeichnet, dass** er eine Tür nach einem der vorhergehenden Ansprüche 1 bis 10 aufweist.

12. Industriefahrzeug **dadurch gekennzeichnet, dass** es einen Fahrgastraum (5) nach Anspruch 11 aufweist.

## Revendications

1. Porte (1) pour un véhicule industriel, ladite porte comprenant :
- une structure principale comprenant un premier (11) et un second montants (12) reliés transversalement par une première pièce de liaison transversale (13) et par une seconde pièce de liaison transversale (14) ;
- un verrou (S) placé près dudit premier montant (11) et une partie de renforcement dudit verrou (S) ;
- au moins une première charnière (C1) comprenant une première partie de liaison (25) à ladite structure principale ;
- un premier élément de renforcement (31) qui relie ladite partie de renforcement (19) dudit verrou à ladite première partie de liaison (25) de ladite première charnière (C1),
**caractérisée en ce que** ladite seconde pièce de liaison transversale (14) comprend une partie formant logement de roue (14B) qui se développe vers ledit premier montant (11) et qui est placée sur une partie en forme d'arc dudit véhicule, lorsque ladite porte est dans une configuration fermée ;
- un second élément de renforcement (32) qui relie une partie dudit second montant (12) sous ladite première partie de liaison (25) à ladite partie formant logement de roue (14B) de ladite seconde pièce de liaison transversale (14).

2. Porte (1) selon la revendication 1, dans laquelle ladite porte (1) comprend une seconde charnière (C2) sous ladite première charnière (C1), ladite seconde charnière (C2) comprenant une seconde partie de liaison (26) à ladite porte (1), ledit second élément de renforcement (32) reliant une partie dudit second montant (12) comprise entre lesdites parties de liaison (25, 26) à ladite partie formant logement de roue (14B) de ladite seconde pièce de liaison transversale (14).

3. Porte (1) selon la revendication 1 ou 2, ladite porte comprenant une tige de tension de butée (51) reliée à ladite porte (1) près de ladite partie dudit second montant (12) comprise entre lesdites parties de liaison (25, 26) auxquelles ledit second élément de renforcement est relié (32).

4. Porte (1) selon l'une quelconque des revendications précédentes 1 à 3, dans laquelle ledit premier élément de renforcement (31) comprend une première pièce d'extrémité (31A) reliée à ladite première partie de liaison (25) de la première charnière (C1) au moyen de premiers moyens de liaison mécaniques (81), ledit premier élément de renforcement (31) comprenant une seconde pièce d'extrémité (31B) reliée à la partie de renforcement (19) du verrou (S) au moyen desdits seconds moyens de liaison mécanique.

5. Porte (1) selon la revendication 4, dans laquelle lesdits premiers moyens de liaison mécanique (81) comprennent des boulons de liaison et dans laquelle lesdits seconds moyens de liaison mécanique comprennent une soudure par points.

6. Porte (1) selon la revendication 4 ou 5, dans laquelle ledit premier élément de renforcement (31) comprend une pièce intermédiaire (38) définie par une partie avant (38A) reliée à ladite première pièce d'extrémité (31A) et par une partie arrière (38B) reliée à ladite seconde pièce d'extrémité (31B), ladite partie avant (38A) et ladite première pièce d'extrémité (31A) sont plus épaisses que ladite partie arrière (38B) et ladite seconde pièce d'extrémité (31B).

7. Porte (1) selon la revendication 6, dans laquelle ledit premier élément de renforcement (31) est réalisé au moyen de la technique appelée « flan multi-épaisseurs ».

8. Porte (1) selon l'une quelconque des revendications précédentes de 1 à 7, dans laquelle ledit second élément de renforcement comprend une première bride de liaison (32A) reliée au second montant (12) sous ladite première pièce de liaison (25) de ladite première charnière, une seconde bride de liaison (32B) reliée à ladite partie formant logement de roue (14B) de ladite seconde pièce de liaison transversale et une partie intermédiaire (35) reliée auxdites brides (32A, 32B).

9. Porte (1) selon la revendication 8, dans laquelle ladite partie intermédiaire (35) dudit second élément de renforcement (32) est constituée d'un élément tubulaire, chacune de ses extrémités étant soudée à une bride de liaison (32A, 32B).

10. Porte (1) selon la revendication 8, dans laquelle ledit second élément de renforcement (32) est réalisé au moyen de la technique appelée « flan multi-épaisseurs ».

11. Cabine (5) pour véhicule industriel **caractérisée en ce qu'**elle comprend une porte selon l'une quelconque des revendications précédentes 1 à 10.

12. Véhicule industriel **caractérisé en ce qu'**il comprend une cabine (5) selon la revendication 11.
